# EUROPEAN PATENT SPECIFICATION

(11) **EP 2 982 971 B1**
(45) Date of publication and mention of the grant of the patent: **12.07.2017**
(21) Application number: 14779367.3
(22) Date of filing: 28.03.2014
(51) Int. Cl.: G01N 29/06, G01N 29/04, G01N 29/44

(54) **ULTRASONIC FLAW-DETECTION METHOD AND DEVICE BY SETTING OF GATES**
VERFAHREN UND VORRICHTUNG ZUR ULTRASCHALLDEFEKTERKENNUNG MITTELS SETZEN VON ZEITFENSTERN
PROCÉDÉ ET DISPOSITIF DE DÉTECTION ULTRASONORE DE DÉFAUTS PAR DETERMINATION DE GRILLES

(30) Priority: 02.04.2013 JP 2013076942
(43) Date of publication of application: 10.02.2016
(73) Proprietor: JFE Steel Corporation, Tokyo 100-0011 (JP)
(72) Inventor: OZEKI, Takafumi, Tokyo 100-0011 (JP); YOTSUJI, Junichi, Tokyo 100-0011 (JP); TAKADA, Hideki, Tokyo 100-0011 (JP); TOMURA, Yasuo, Tokyo 100-0011 (JP)
(74) Representative: Grünecker Patent- und Rechtsanwälte PartG mbB
(86) International application number: PCT/JP2014/059360
(87) International publication number: WO 2014/163022

(56) References cited:
- JP-A- 2005 037 407
- JP-A- 2005 195 487
- JP-A- 2005 283 134
- JP-A- 2006 275 945
- JP-A- 2008 102 071
- JP-A- 2012 185 062
- US-A1- 2011 030 479

## Description

### Field

The present invention relates to an ultrasonic flaw detection method and an ultrasonic flaw detection apparatus for detecting internal defects in a test object by use of ultrasonic waves.

### Background

Ultrasonic flaw detection is widely used as a technique for detecting internal defects in metallic materials. In ultrasonic flaw detection, ultrasonic waves received by receiving probes include, not only ultrasonic waves caused by internal defects in a metallic material (called flaw echoes), but also ultrasonic waves caused by reflection by a front surface or a back surface of the metallic material (called boundary echoes). Accordingly, a flaw echo detection gate is set over a time range in which a flaw echo is possibly detected, and flaw detection is performed by regarding only the ultrasonic waves within the range of the flaw echo detection gate as a target to be tested.

In automatic ultrasonic flaw detection, a function for automatically performing the above mentioned setting of a flaw echo detection gate is implemented. That is, in automatic ultrasonic flaw detection, ultrasonic waves caused by reflection by a front surface or a back surface of a metallic material are detected, and a flaw echo detection gate is automatically set so as to enable elimination of these ultrasonic waves other than flaw echoes.

For example, as a method of automatically setting a flaw echo detection gate in automatic ultrasonic flaw detection, a method of automatically setting an end point of a flaw echo detection gate with reference to a time, at which received ultrasonic waves exceed a boundary echo detection threshold for the first time within a boundary echo detection gate, has been known (see Patent Literature 1).

### Citation List

### Patent Literature

Patent Literature 1: Japanese Patent Application Publication No. 2005-283134

### Summary

### Technical Problem

However, in the conventional method of setting a flaw echo detection gate, if an internal defect is close to a boundary of a test object, it is difficult to separate a flaw echo from a boundary echo. In particular, if a distance from a boundary of a test object to an internal defect is equal to or less than several times as long as a wavelength of ultrasonic waves used in flaw detection (wavelength inside the test object), it is very difficult to separate a flaw echo from a boundary echo.

What is more, waveforms of boundary echoes are not necessarily constant and change from test object to test object. Therefore, if an end point of a flaw echo detection gate is set close to a boundary echo, the boundary echo may be erroneously detected as a flaw echo. On the contrary, if an end point of a flaw echo detection gate is set far from a boundary echo, an undetected area is increased and non-detection of a flaw echo is caused.

The present invention has been made in view of the above, and an object thereof is to provide an ultrasonic flaw detection method and an ultrasonic flaw detection apparatus that cause no erroneous detection while minimizing an undetected area, even if forms of boundary echoes change from test object to test object.

### Solution to Problem

An ultrasonic flaw detection method according to the present invention includes: a condition setting step of setting, according to a type of a test object, a boundary echo detection threshold and a gate end point relative position; a flaw detection signal obtaining step of obtaining a flaw detection signal, by converting ultrasonic waves received from the test object into an electric signal; a boundary echo detection step of detecting a boundary echo detection time of the flaw detection signal, by using the boundary echo detection threshold; a flaw echo detection gate setting step of setting an end point of a flaw echo detection gate, by subtracting the gate end point relative position from a base time determined based on the boundary echo detection time; and a flaw echo detection step of detecting a flaw echo, by using the flaw detection signal within the flaw echo detection gate.

An ultrasonic flaw detection apparatus according to the present invention includes: a flaw detection signal obtaining unit that obtains a flaw detection signal by converting ultrasonic waves received from a test object into an electric signal; a database that records therein a boundary echo detection threshold and a gate end point relative position, according to a type of the test object; a boundary echo detection means that detects a boundary echo detection time of the flaw detection signal by using the boundary echo detection threshold recorded in the database; a gate setting means that sets an end point of a flaw echo detection gate by subtracting the gate end point relative position recorded in the database from a base time determined based on the boundary echo detection time; and a flaw echo detection means that detects a flaw echo by using the flaw detection signal within the flaw echo detection gate.

### Advantageous Effects of Invention

An ultrasonic flaw detection method and an ultrasonic flaw detection apparatus according to the present invention achieve an effect of not causing erroneous detection while minimizing an undetected area, even if forms of boundary echoes change from test object to test object.

### Brief Description of Drawings

FIGS. 1 are schematic diagrams of propagation of ultrasonic waves and received ultrasonic waves in reflection type flaw detection.
FIGS. 2 are schematic diagrams of propagation of ultrasonic waves and received ultrasonic waves in transmission type flaw detection.
FIG. 3 is a schematic diagram illustrating problems generated by waveforms of boundary echoes being different.
FIGS. 4 are schematic diagrams illustrating a method of setting a flaw detection gate in an ultrasonic flaw detection method according to an embodiment of the present invention.
FIGS. 5 are diagrams illustrating an example of generation of a correspondence table between test objects, and boundary echo detection thresholds and gate end point relative positions.
FIG. 6 is a block diagram schematically illustrating a configuration of an ultrasonic flaw detection apparatus according to a first embodiment of the present invention.
FIG. 7 is a flow chart illustrating a sequence of an ultrasonic flaw detection method according to the first embodiment of the present invention.
FIG. 8 is a flow chart illustrating a modified example of processing of Step S4 illustrated in FIG. 7.
FIGS. 9 are explanatory diagrams schematically illustrating a sequence of processing illustrated in FIG. 8.
FIG. 10 is graph of a flaw detection signal illustrating a working example of ultrasonic flaw detection by the ultrasonic flaw detection apparatus and ultrasonic flaw detection method according to the first embodiment of the present invention.
FIG. 11 corresponds to graphs of flaw detection signals illustrating a working example of ultrasonic flaw detection by the ultrasonic flaw detection apparatus and ultrasonic flaw detection method according to the first embodiment of the present invention.
FIG. 12 is a block diagram schematically illustrating a configuration of an ultrasonic flaw detection apparatus according to a second embodiment of the present invention.
FIG. 13 is a flow chart illustrating a sequence of an ultrasonic flaw detection method according to the second embodiment of the present invention.
FIG. 14 is an explanatory diagram schematically illustrating the ultrasonic flaw detection method according to the second embodiment of the present invention. Description of Embodiments

Hereinafter, ultrasonic flaw detection methods and ultrasonic flaw detection apparatuses according to embodiments of the present invention will be described in detail based on the drawings. The present invention is not to be limited by the embodiments described below.

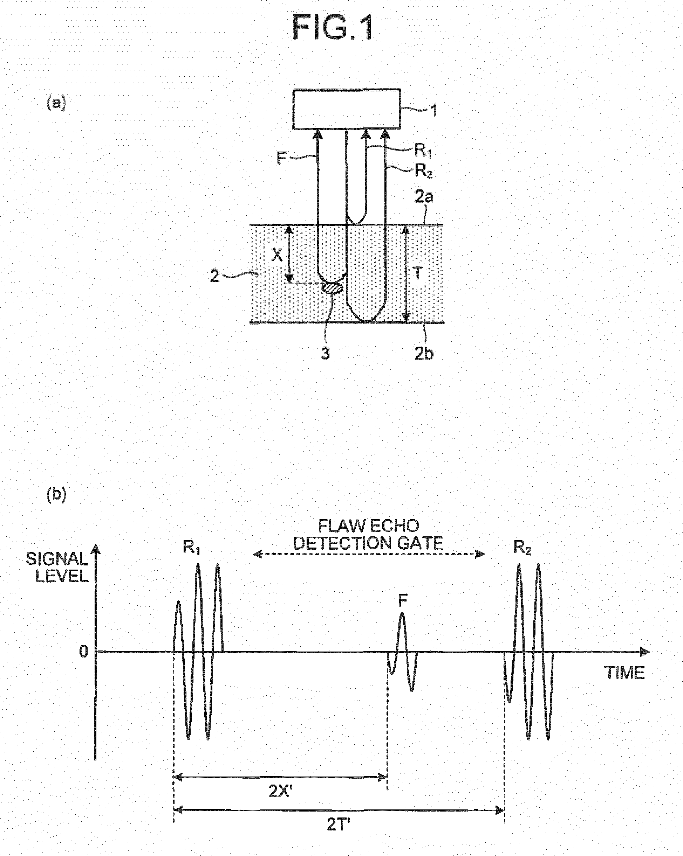

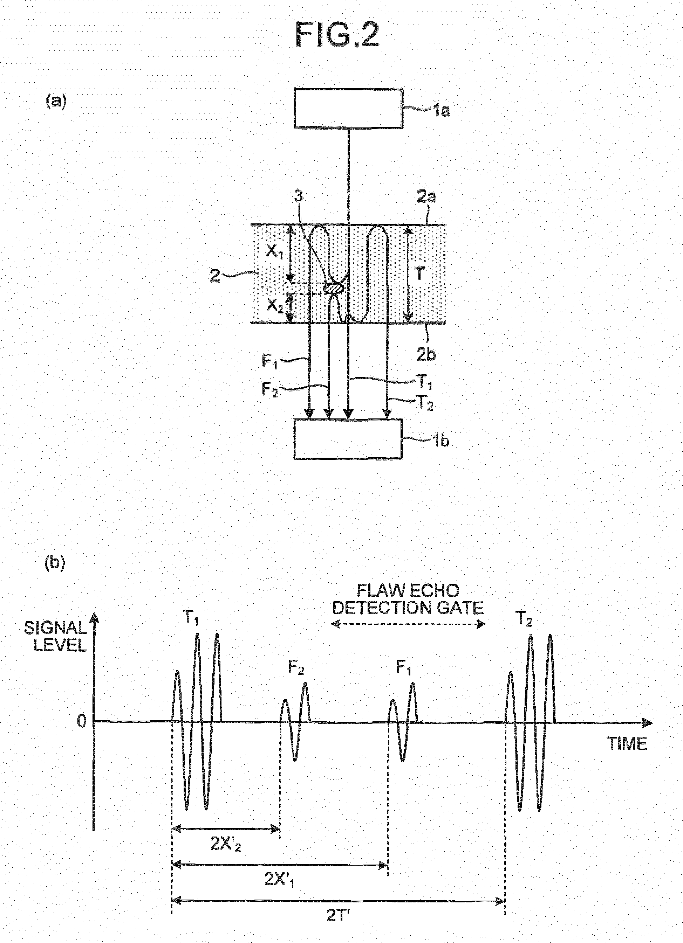

Ultrasonic flaw detection by the vertical incident method includes vertical reflection type ultrasonic flaw detection (hereinafter, referred to as reflection type flaw detection) and vertical transmission type ultrasonic flaw detection (hereinafter, referred to as transmission type flaw detection). The ultrasonic flaw detection methods and ultrasonic flaw detection apparatuses according to the embodiments of the present invention are applicable to any of the reflection type flaw detection and the transmission type flaw detection. FIGS. 1 are schematic diagrams of propagation of ultrasonic waves and received ultrasonic waves in reflection type flaw detection, and FIGS. 2 are schematic diagrams of propagation of ultrasonic waves and received ultrasonic waves in transmission type flaw detection.

As illustrated in FIG. 1(a), in the reflection type flaw detection, a transmitting and receiving probe 1 transmits ultrasonic waves to a test object 2 and receives ultrasonic waves reflected from the test object 2. The ultrasonic waves reflected from the test object 2 include, not only ultrasonic waves reflected by a flaw 3 in the test object 2 (hereinafter, referred to as a flaw echo F), but also ultrasonic waves reflected by a front surface 2a of the test object 2 (hereinafter, referred to as a front surface echo R₁) and ultrasonic waves reflected by a back surface 2b of the test object 2 (hereinafter, referred to as a back surface echo R₂).

FIG. 1(b) is a graph schematically illustrating the ultrasonic waves received by the transmitting and receiving probe 1. The graph illustrated in FIG. 1(b) represents, in relation to a time axis, a flaw detection signal of the received ultrasonic waves. As illustrated in FIG. 1(b), the flaw echo F, the front surface echo R₁, and the back surface echo R₂ are received by the transmitting and receiving probe 1 at different times. This is because, as illustrated in FIG. 1(a), the flaw echo F, the front surface echo R₁, and the back surface echo R₂ have different propagation distances to reach the transmitting and receiving probe 1.

Later than the front surface echo R₁ by twice a propagation time X' corresponding to a flaw depth X in the test object 2, the flaw echo F reaches the transmitting and receiving probe 1. Further, later than the front surface echo R₁ by twice a propagation time T' corresponding to a thickness T of the test object 2, the back surface echo R₂ reaches the transmitting and receiving probe 1. Accordingly, a flaw echo detection gate is a range from a terminal end of a time at which the front surface echo R₁ is detected to a starting end of a time at which the back surface echo R₂ is detected.

On the contrary, as illustrated in FIG. 2(a), in the transmission type flaw detection, a transmitting probe la transmits ultrasonic waves to the test object 2 and a receiving probe 1b receives ultrasonic waves that penetrate through the test object 2. The ultrasonic waves received by the receiving probe 1b include, not only ultrasonic waves reflected by the flaw 3 in the test object 2 and the front surface 2a (hereinafter, referred to as a flaw echo F₁) and ultrasonic waves reflected by the flaw 3 in the test object 2 and the back surface 2b (hereinafter, referred to as a flaw echo F₂), but also ultrasonic waves directly penetrating through the test object 2 (hereinafter, referred to as a transmission echo T₁) and ultrasonic waves reflected by the front surface 2a and the back surface 2b of the test object 2 (hereinafter, referred to as a reflection echo T₂).

Later than the transmission echo T₁ by twice a propagation time X₁' corresponding to a flaw depth X₁ in the test object 2, the flaw echo F₁ reaches the receiving probe 1b. Later than the transmission echo T₁ by twice a propagation time X₂' corresponding to a flaw depth X₂ from the back surface 2b in the test object 2, the flaw echo F₂ reaches the receiving probe 1b. Further, later than the transmission echo T₁ by twice a propagation time T' corresponding to the thickness T of the test object 2, the reflection echo T₂ reaches the receiving probe 1b. Accordingly, a flaw echo detection gate is a range from a terminal end of a time at which the transmission echo T₁ is detected to a starting end of a time at which the reflection echo T₂ is detected.

In either of the above described reflection type flaw detection and the transmission type flaw detection, in order to detect the flaw 3 close to the back surface 2b of the test object 2, a flaw echo detection gate end point (hereinafter, referred to as a gate end point) needs to be set near a start point of the back surface echo R₂ or of the reflection echo T₂. Further, if a relative position between the transmitting and receiving probe 1, the transmitting probe 1a, or the receiving probe 1b, and the test object 2 changes, or the thickness of the test object 2 changes depending on a flaw detection position, since an appearing time of the back surface echo R₂ or reflection echo T₂ also changes, the gate end point needs to be automatically set according to that change. Therefore, the back surface echo R₂ or reflection echo T₂ (hereinafter, for simplification, referred to as a boundary echo without distinguishing therebetween) is detected, and a time that is earlier by a predetermined time period from the boundary echo is automatically set as a gate end point.

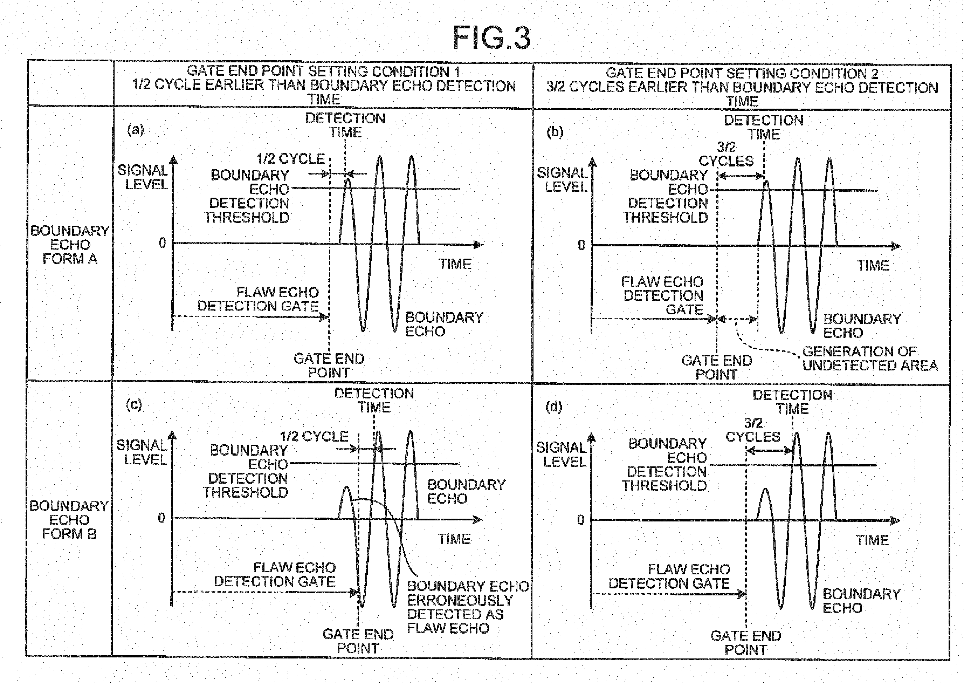

However, as described already, waveforms of boundary echoes are not necessarily constant and differ from test object to test object. As a result, if an end point of a flaw echo detection gate is set near a boundary echo, the boundary echo is erroneously detected, and if an end point of a flaw echo detection gate is set far from a boundary echo, an undetected area is increased. FIG. 3 is a schematic diagram illustrating problems generated by waveforms of boundary echoes being different from one another.

FIG. 3 illustrates a total of four patterns of setting a gate end point, for gate end point setting conditions 1 and 2 for each of boundary echo forms A and B. FIG. 3(a) illustrates a case where the boundary echo form A is detected with a predetermined threshold when a relative time between the gate end point and a boundary echo detection time is set at 1/2 cycle. FIG. 3(b) illustrates a case where the boundary echo form A is detected with the predetermined threshold when a relative time between the gate end point and the boundary echo detection time is set at 3/2 cycles. FIG. 3(c) illustrates a case where the boundary echo form B is detected with the predetermined threshold when a relative time between the gate end point and a boundary echo detection time is set at 1/2 cycle. FIG. 3(d) illustrates a case where the boundary echo form B is detected with the predetermined threshold when a relative time between the gate end point and the boundary echo detection time is set at 3/2 cycles. The boundary echo detection time referred to herein means a time at which a flaw detection signal exceeds a predetermined threshold if the threshold is set at a positive value, or a time at which a flaw detection signal becomes less than a predetermined threshold if the threshold is set at a negative value.

As understood when FIG. 3(a) and FIG. 3(c) are compared to each other, if the relative time between the gate end point and the boundary echo detection time is set at 1/2 cycle, the gate end point is able to be set appropriately for the boundary echo form A, but a starting end of the boundary echo is erroneously detected as a flaw for the boundary echo form B. As understood when FIG. 3(b) and FIG. 3(d) are compared to each other, if the relative time between the gate end point and the boundary echo detection time is set at 3/2 cycles, the gate end point is able to be set appropriately for the boundary echo form B, but an undetected area is generated for the boundary echo form A.

Thus, in an ultrasonic flaw detection method and an ultrasonic flaw detection apparatus according to an embodiment of the present invention, a boundary echo detection threshold and a gate end point relative position are determined beforehand for each type of test objects. As a result of study and investigation, it has been found that shapes of boundary echoes do not largely change during flaw detection of the same test object. That is, a shape of a boundary echo is able to be predicted beforehand from: flaw detection conditions, such as a probe to be used and a flaw detection gain; a plate thickness of a test object; manufacturing conditions; and the like, and a boundary echo detection threshold and a gate end point relative position are able to be determined beforehand according to the shape of the boundary echo. A boundary echo detection threshold is a threshold for detecting a boundary echo with a time at which a flaw detection signal exceeds this threshold if the threshold is set at a positive value, or a threshold for detecting a boundary echo with a time at which a flaw detection signal becomes less than this threshold if the threshold is set at a negative value, and a gate end point relative position is a relative time between a boundary echo detection time detected as such and a gate end point.

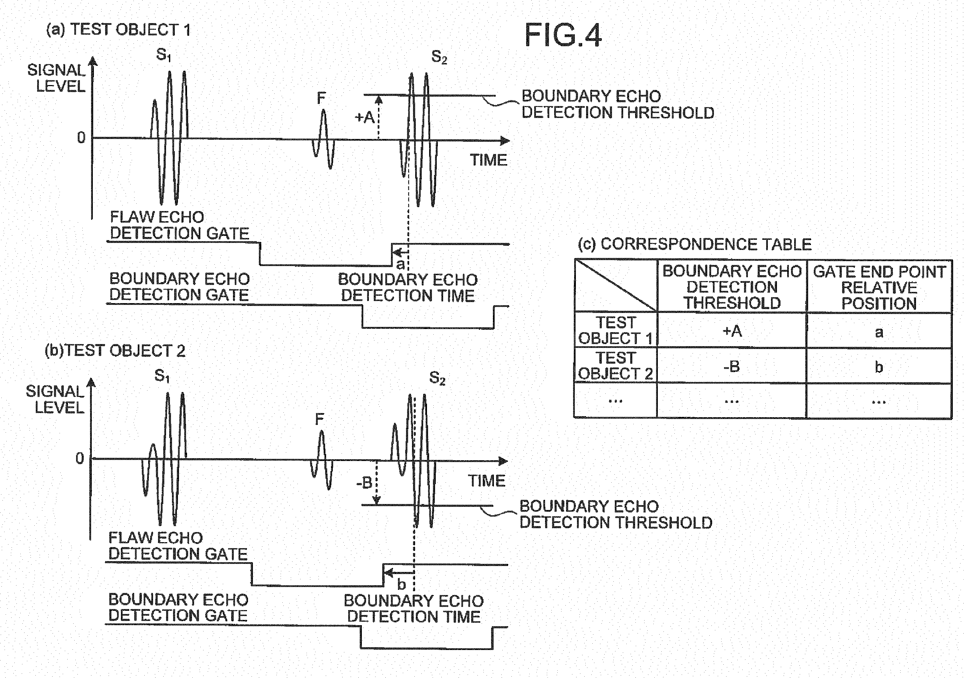

FIGS. 4 are schematic diagrams illustrating a method of setting a flaw detection gate in the ultrasonic flaw detection method and the ultrasonic flaw detection apparatus according to the embodiment of the present invention. FIGS. 4 illustrate the methods of setting a flaw detection gate for (a) a test object 1 and (b) a test object 2. FIG. 4(c) is a correspondence table between the test objects, and boundary echo detection thresholds and gate end point relative positions. In FIG. 4(a) and FIG. 4(b), end points of flaw detection gates are set based on this correspondence table.

As illustrated in FIG. 4(a), a boundary echo S₂ is detected with a boundary echo detection threshold. Since the boundary echo detection threshold for the test object 1 is "+A", a time at which a flaw detection signal of ultrasonic waves exceeds "+A" for the first time within a range of a boundary echo detection gate is regarded as a boundary echo detection time. Since a gate end point relative position for the test object 1 is "a", a time earlier than this boundary echo detection time by a time period "a" is set as an end point of a flaw detection gate. By separately setting a start point of the flaw detection gate from a relation with the boundary echo S₁, the flaw detection gate is set. An echo detected within a range of the flaw detection gate set as described above is a flaw echo F.

As illustrated in FIG. 4(b), similarly, a boundary echo S₂ is detected with a boundary echo detection threshold. Since the boundary echo detection threshold for the test object 2 is "-B", a time at which a flaw detection signal of ultrasonic waves becomes less than "-B" for the first time within a range of a boundary echo detection gate is regarded as a boundary echo detection time. Since a gate end point relative position for the test object 2 is "b", a time earlier than this boundary echo detection time by a time period "b" is set as an end point of a flaw detection gate. Since the ultrasonic flaw detection method according to the embodiment of the present invention uses a boundary echo detection threshold by distinguishing between positivity and negativity thereof, threshold determination is performed by distinguishing between the positivity and negativity without rectification of a flaw detection signal of ultrasonic waves. Since the threshold determination is performed by distinguishing between the positivity and negativity, the ultrasonic flaw detection method according to the embodiment of the present invention has an advantage that phases of received ultrasonic waves are able to be limited.

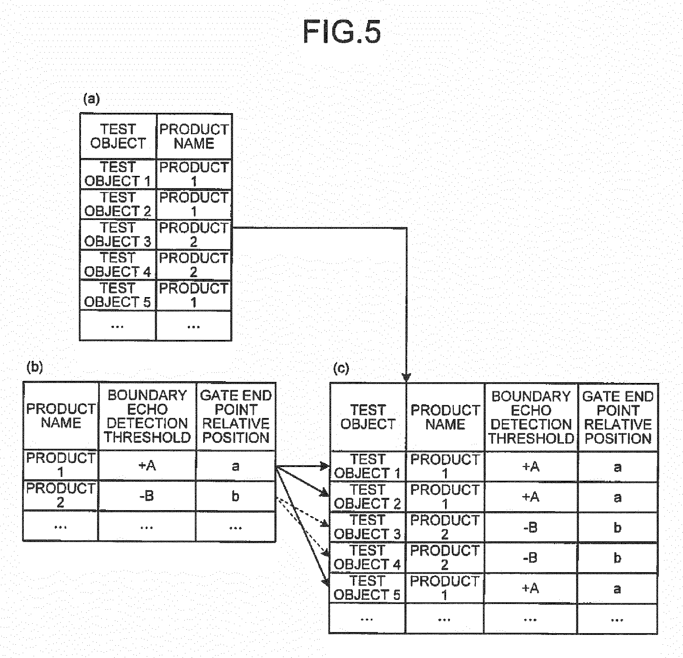

FIGS. 5 are diagrams illustrating an example of generation of a correspondence table between test objects, and boundary echo detection thresholds and gate end point relative positions. FIG. 5(a) is a table illustrating an example of a manufacturing order in a manufacturing line of metallic products such as steel plates. As illustrated in FIG. 5(a), in a general manufacturing line for metallic products, more than one product is mixedly manufactured. Thus, preliminary investigation is performed per product, to determine a boundary echo detection threshold and a gate end point relative position, and to store, into a database, correspondence between the products, and the boundary echo detection thresholds and gate end point relative positions. FIG. 5(b) is a table illustrating an example of the correspondence between the test objects, and the boundary echo detection thresholds and gate end point relative positions.

For flaw detection of test objects, FIG. 5(c) is obtained by combining FIG. 5(a) and FIG. 5(b). FIG. 5(c) is a table illustrating a state where FIG. 5(a) and FIG. 5(b) have been combined together. As illustrated in FIG. 5(c), by combining FIG. 5(a) and FIG. 5(b), the correspondence between the flaw detection order of the test objects, and the boundary echo detection thresholds and gate end point relative positions is obtained. Therefore, by performing flaw detection of a test object by following the correspondence table of FIG. 5(c), the ultrasonic flaw detection method and the ultrasonic flaw detection apparatus according to the embodiment of the present invention are able to be implemented.

### [Ultrasonic Flaw Detection Apparatus According to First Embodiment]

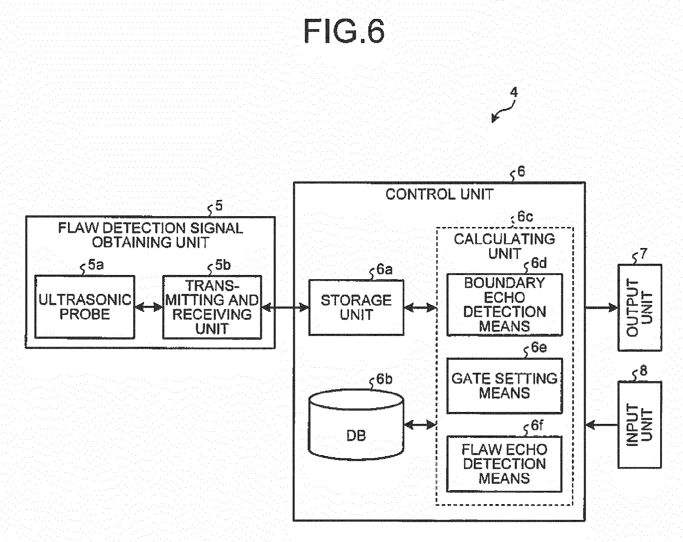

FIG. 6 is a block diagram schematically illustrating a configuration of an ultrasonic flaw detection apparatus according to a first embodiment of the present invention. As illustrated in FIG. 6, this ultrasonic flaw detection apparatus 4 has: a flaw detection signal obtaining unit 5, which transmits ultrasonic waves for detecting a defect in a test object and receives a flaw detection signal resulting from the transmitted ultrasonic waves; a control unit 6, which controls each unit of the ultrasonic flaw detection apparatus 4; an output unit 7, which outputs a detection result of the test object, and the like; and an input unit 8, which inputs various pieces of information.

The flaw detection signal obtaining unit 5 has an ultrasonic probe 5a and a transmitting and receiving unit 5b. The flaw detection signal obtaining unit 5 transmits, as ultrasonic waves, an electric signal transmitted from the transmitting and receiving unit 5b to outside from the ultrasonic probe 5a and outputs, as a flaw detection signal of the electric signal, ultrasonic waves received by the ultrasonic probe 5a to the transmitting and receiving unit 5b. As illustrated in FIG. 1 and FIG. 2, ultrasonic flaw detection by the vertical incidence method includes the reflection type flaw detection and transmission type flaw detection, and depending thereon, the ultrasonic probe 5a may be the transmitting and receiving probe 1, or a combination of the transmitting probe 1a and the receiving probe 1b, but in the following description, without distinguishing these from each other, both will be referred to as the ultrasonic probe 5a.

The ultrasonic probe 5a is realized by using a piezoelectric vibrator or the like, transmits ultrasonic waves to outside by application of a pulse signal from the transmitting and receiving unit 5b, receives ultrasonic waves from the outside, and converts the received ultrasonic waves into an electric signal. The transmitting and receiving unit 5b outputs, to the outside, via the ultrasonic probe 5a, an ultrasonic pulse signal by applying a pulse signal of a resonance frequency of the ultrasonic probe 5a or a frequency in the vicinity thereof to the ultrasonic probe 5a.

The control unit 6 includes a storage unit 6a, a database (DB) 6b, and a calculating unit 6c, and controls each unit of the ultrasonic flaw detection apparatus 4. The storage unit 6a is a temporary storage device that stores therein various pieces of information, such as test data and the like of a test object, which have been received from the flaw detection signal obtaining unit 5. In particular, the storage unit 6a according to the first embodiment of the present invention has a storage capacity that enables storage of at least once or preferably more than once of the flaw detection signals received from the flaw detection signal obtaining unit 5.

The database (DB) 6b is a recording device realized by a magnetic disk or the like. The database (DB) 6b records therein data, such as, as exemplified in FIG. 5, a manufacturing order in a manufacturing line, correspondence between products, and boundary echo detection thresholds and gate end point relative positions, and correspondence between a flaw detection order of the test objects, and the boundary echo detection thresholds and gate end point relative positions. These data recorded in the database (DB) 6b are referred to when the calculating unit 6c detects a flaw echo.

The calculating unit 6c analyzes a flaw detection signal stored in the storage unit 6a to detect a flaw echo, by referring to these data recorded in the database (DB) 6b. The calculating unit 6c is a calculating device realized by an application specific integrated circuit (ASIC), a general purpose integrated circuit, a combination of these, or the like. That is, the calculating unit 6c realizes, with hardware or software, a boundary echo detection means 6d, a gate setting means 6e, a flaw echo detection means 6f, and a control means for controlling each of other units of the ultrasonic flaw detection apparatus 4.

The boundary echo detection means 6d detects a boundary echo detection time by referring to the database (DB) 6b and using a boundary echo detection threshold according to a test object. That is, if a value of the boundary echo detection threshold is positive and a flaw detection signal exceeds the boundary echo detection threshold within a boundary echo detection gate, or if a value of the boundary echo detection threshold is negative and a flaw detection signal becomes less than the boundary echo detection threshold within a boundary echo detection gate, the boundary echo detection means 6d determines that a boundary echo has been detected and regards a time at which this boundary echo is detected as a boundary echo detection time.

The gate setting means 6e sets an end point of a flaw echo detection gate by referring to the database (DB) 6b and subtracting a gate end point relative position corresponding to the test object from the boundary echo detection time. The flaw echo detection means 6f detects a flaw echo from the flaw detection signal stored in the storage unit 6a within a range of the flaw echo detection gate that has been set as described above.

The output unit 7 is, for example, a display device that displays the detected flaw echo, and is, for example, a transmitting device that transmits a warning signal or the like to a downstream process when the flaw echo is detected. In order to perform analysis of whether or not a cause of generation of the flaw echo is a defect in the product, the output unit 7 may be configured to output the output of the output unit 7 to a host computer.

The input unit 8 is, for example, an input device, such as a power switch and input keys, and is, for example, a receiving device that receives manufacturing information in a manufacturing line from a host control device that controls the manufacturing line. Examples of input information input by the input unit 8 include a manufacturing order in a manufacturing line as exemplified in FIG. 5(a).

The ultrasonic flaw detection apparatus 4 according to the embodiment of the present invention performs AD conversion on the flaw detection signal obtained by the flaw detection signal obtaining unit 5 and performs signal processing thereon. Since a boundary echo is detected later than a flaw detection gate, processing digital signals is advantageous over processing analog signals. Further, a sampling frequency for the AD conversion of the flaw detection signal is desirably equal to or greater than five times a frequency of the flaw detection signal and more desirably equal to or greater than ten times the frequency of the flaw detection signal. If the AD conversion is performed with a sampling frequency that is five times the frequency of the flaw detection signal, the flaw detection signal is digitalized at "360° / 5 = 72°" intervals.

The ultrasonic flaw detection apparatus 4 has been described as having a configuration with one ultrasonic probe 5a (reflection type flaw detection) or a pair of ultrasonic probes 5a (transmission type flaw detection), but a configuration with more than one ultrasonic probe 5a (reflection type flaw detection) or more than one pair of ultrasonic probes 5a (transmission type flaw detection) may be adopted. In that case, different boundary echo detection thresholds and gate end point relative positions may be set for the respective ultrasonic probes 5a. That is, for each ultrasonic probe 5a, a correspondence table as exemplified in FIG. 5(b) is recorded in the database (DB) 6b, and the calculating unit 6c performs setting of different boundary echo detection thresholds and gate end point relative positions for the respective ultrasonic probes 5a. According to this configuration, variation among the ultrasonic probes 5a is able to be dealt with, and flaw echo detection accuracy is improved further.

### [Ultrasonic Flaw Detection Method According to First Embodiment]

Hereinafter, an ultrasonic flaw detection method according to the first embodiment of the present invention will be described. In the following description, the ultrasonic flaw detection method according to the first embodiment of the present invention will be described with reference to the drawings of the configuration of the ultrasonic flaw detection apparatus according to the first embodiment of the present invention and the like, but the ultrasonic flaw detection method according to the first embodiment of the present invention is not to be limited by the configuration illustrated in these drawings.

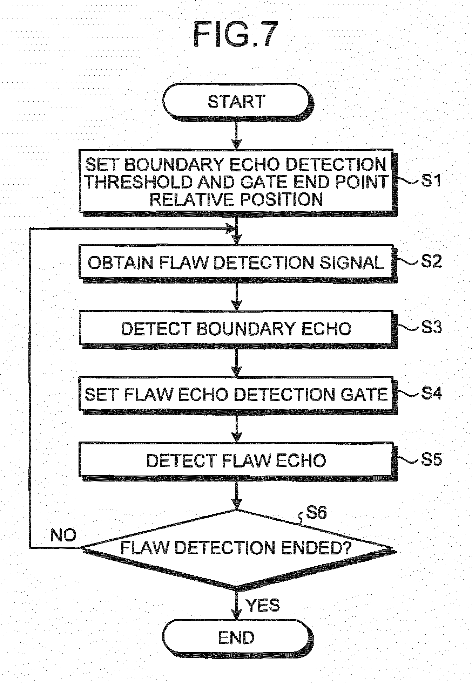

FIG. 7 is a flow chart illustrating a sequence of the ultrasonic flaw detection method according to the embodiment of the present invention. As illustrated in FIG. 7, in the ultrasonic flaw detection method according to the embodiment of the present invention, first, the calculating unit 6c refers to the database (DB) 6b and performs setting of a boundary echo detection threshold and a gate end point relative position, according to a test object (Step S1). Since the database 6b records therein, as described already, the data, such as the correspondence between the flaw detection order of test objects, and the boundary echo detection thresholds and gate end point relative positions, the boundary echo detection threshold and the gate end point relative position corresponding to the test object, on which the ultrasonic flaw detection apparatus 4 is currently performing flaw detection, are selected.

Next, the flaw detection signal obtaining unit 5 converts ultrasonic waves received from the test object into an electric signal and obtains a flaw detection signal (Step S2). The flaw detection signal obtained by the flaw detection signal obtaining unit 5 is temporarily stored in the storage unit 6a.

Next, the boundary echo detection means 6d of the calculating unit 6c detects a boundary echo from the flaw detection signal stored in the storage unit 6a (Step S3). The boundary echo detection means 6d detects the boundary echo by using the boundary echo detection threshold set in Step S1. That is, if a value of the boundary echo detection threshold is positive and the flaw detection signal exceeds the boundary echo detection threshold within a boundary echo detection gate, or if the value of the boundary echo detection threshold is negative and the flaw detection signal becomes less than the boundary echo detection threshold within a boundary echo detection gate, the boundary echo detection means 6d determines that a boundary echo has been detected, and regards a time at which this boundary echo is detected as a boundary echo detection time.

Next, the gate setting means 6e of the calculating unit 6c performs setting of a flaw echo detection gate (Step S4). The gate setting means 6e performs the setting of the flaw echo detection gate by using the gate end point relative position set in Step S1. That is, the gate setting means 6e sets an end point of the flaw echo detection gate by subtracting the gate end point relative position set in Step S1 from a base time, which is the boundary echo detection time detected in Step S2.

The flaw echo detection means 6f of the calculating unit 6c then detects a flaw echo from the flaw detection signal stored in the storage unit 6a within a range of the flaw echo detection gate set in Step S4 (Step S5).

Lastly, the control unit 6 performs determination of whether or not the ultrasonic flaw detection apparatus 4 has ended flaw detection of a predetermined range or a predetermined number of times (Step S6). If flaw detection of the predetermined range has not been ended (Step S6: No), return to Step S2 is performed and the flaw detection signal obtaining unit 5 obtains the next flaw detection signal. On the contrary, if flaw detection of the predetermined range has been ended (Step S6: Yes), the ultrasonic flaw detection method according to the embodiment of the present invention is ended.

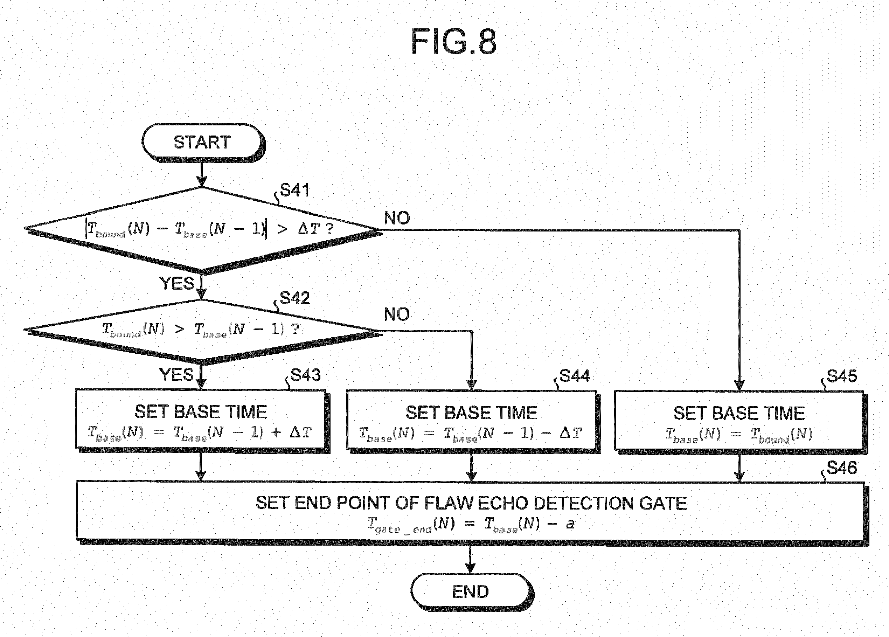

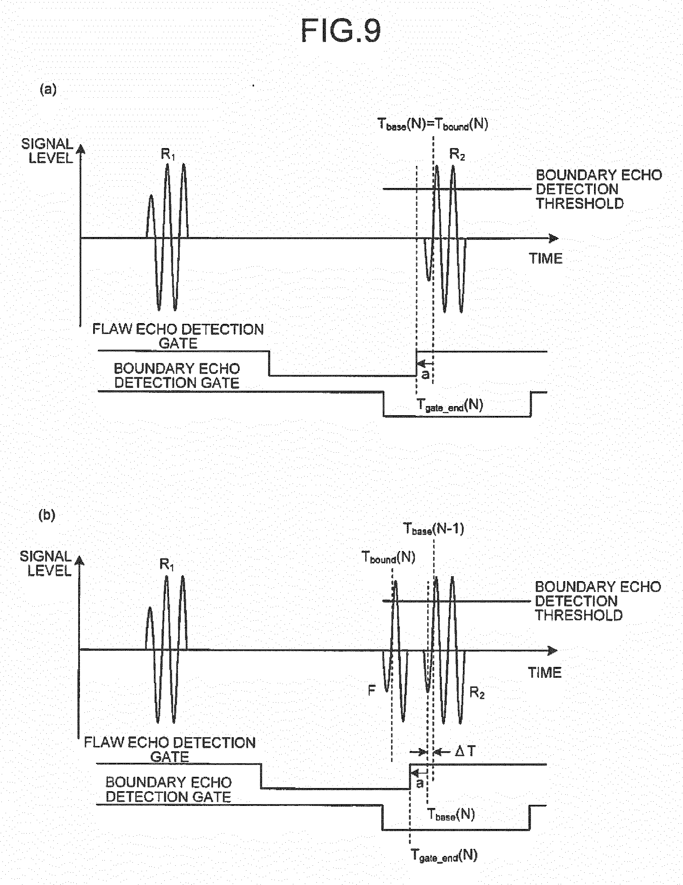

According to the above description, the gate setting means 6e sets an end point of a flaw echo detection gate by subtracting a gate end point relative position from a base time, which is a boundary echo detection time, but the end point of the echo detection gate may be set according to a sequence of processing illustrated in FIG. 8 and FIGS. 9. FIG. 8 is a flow chart illustrating a modified example of processing of Step S4 illustrated in FIG. 7. FIGS. 9 are explanatory diagrams schematically illustrating the sequence of processing illustrated in FIG. 8.

As illustrated in FIG. 8, in this sequence of processing, the gate setting means 6e determines whether or not an absolute value of a time difference between a boundary echo detection time T_{bound}(N) detected in the current processing and a base time T_{base}(N-1) in the previous processing is greater than a predetermined time difference ΔT (Step S41). If, as a result of this determination, the absolute value of the time difference is not greater than the predetermined time difference ΔT, the gate setting means 6e advances the flaw echo detection gate setting processing to processing of Step S45 (Step S41: No). On the contrary, if the absolute value of the time difference is greater than the predetermined time difference ΔT, the gate setting means 6e advances the flaw echo detection gate setting processing to processing of Step S42 (Step S41: Yes).

In the processing of Step S42, the gate setting means 6e determines whether or not the boundary echo detection time T_{bound}(N) detected in the current processing is later than the base time T_{base}(N-1) in the previous processing. If, as a result of the determination, the boundary echo detection time T_{bound}(N) is later than the base time T_{base}(N-1), the gate setting means 6e advances the flaw echo detection gate setting processing to processing of Step S43 (Step S42: Yes). On the contrary, if the boundary echo detection time T_{bound}(N) is not later than the base time T_{base}(N-1), the gate setting means 6e advances the flaw echo detection gate setting processing to processing of Step S44 (Step S42: No).

In the processing of Step S43, the gate setting means 6e sets, as a base time T_{base}(N) in the current processing, a time later than the base time T_{base}(N-1) in the previous processing by the predetermined time difference ΔT. Thereby, the processing of Step S43 is completed and the flaw echo detection gate setting processing is advanced to processing of Step S46.

In the processing of Step S44, the gate setting means 6e sets, as the base time T_{base}(N) of the current processing, a time earlier than the base time T_{base}(N-1) in the previous processing by the predetermined time difference ΔT. Thereby, the processing of Step S44 is completed and the flaw echo detection gate setting processing is advanced to processing of Step S46.

In the processing of Step S45, the gate setting means 6e sets, as the base time T_{base}(N) in the current processing, the boundary echo detection time T_{bound}(N) detected in the current processing. Thereby, the processing of Step S45 is completed and the flaw echo detection gate setting processing is advanced to processing of Step S46.

In the processing of Step S46, the gate setting means 6e sets, as an end point T_{gate_end}(N) of a flaw echo detection gate, a time earlier, by the gate end point relative position "a", than the base time T_{base}(N) set in the processing of any of Step S43 to Step S45. Thereby, the processing of Step S46 is completed and a series of steps of the flaw echo detection gate setting processing is ended.

As evident from the above description, according to this modified example, if the absolute value of the time difference between the boundary echo detection time T_{bound}(N) detected in the current processing and the base time T_{base}(N-1) in the previous processing is less than the predetermined time difference ΔT, the control unit 6 sets the end point of the flaw echo detection gate T_{gate_end}(N), as illustrated in FIG. 9(a), by regarding the boundary echo detection time T_{bound}(N) detected in the current processing as the base time T_{base}(N) in the current processing.

On the contrary, if the absolute value of the time difference between the boundary echo detection time T_{bound}(N) detected in the current processing and the base time T_{base}(N-1) in the previous processing is greater than the predetermined time difference ΔT, the gate setting means 6e sets the end point of the flaw echo detection gate T_{gate_end}(N), as illustrated in FIG. 9(b), by regarding, as the base time T_{base}(N) in the current processing, the time earlier or later than the boundary echo detection time T_{bound}(N-1) detected in the previous processing by the predetermined time difference ΔT.

That is, according to this modified example, the gate setting means 6e controls a change in the base time T_{base}(N) for each measurement to be equal to or less than the predetermined time difference ΔT. Thereby, according to this modified example, while being able to follow movement of a boundary echo caused by vibration, a plate thickness change, or the like, missing a flaw echo, as a result of erroneously recognizing a flaw echo F as a boundary echo and setting a flaw echo detection gate with reference thereto in a case, where the flaw echo F exceeding a boundary echo detection threshold as illustrated in FIG. 9(b) is detected, is able to be suppressed.

### [Working Example According to First Embodiment]

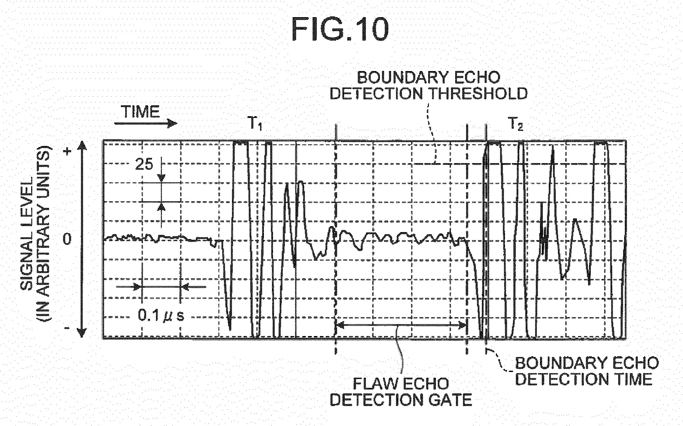

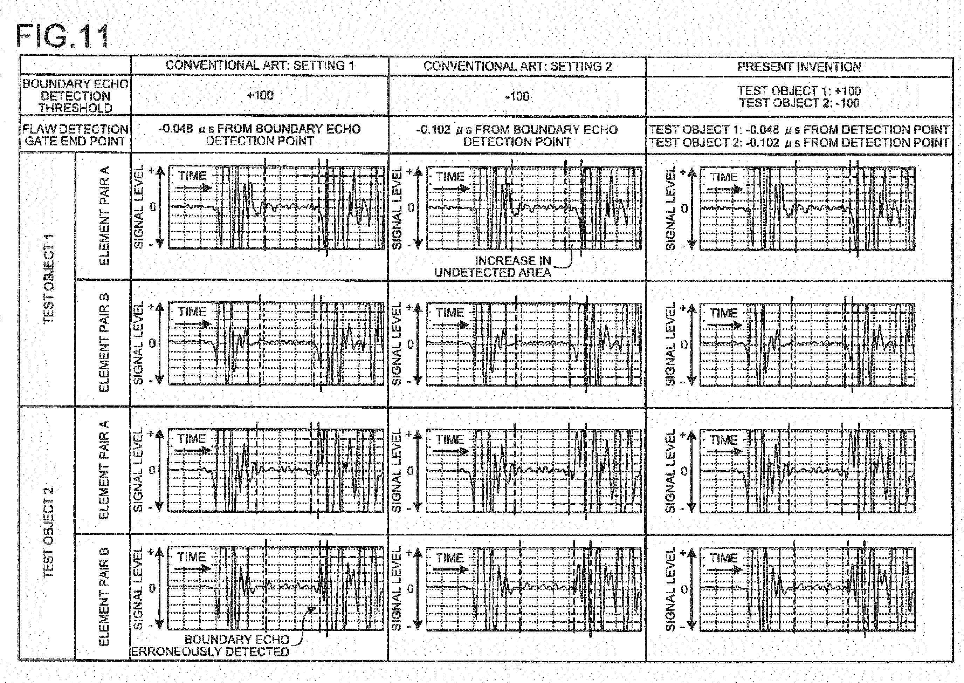

FIG. 10 and FIG. 11 are graphs of flaw detection signals illustrating a working example of ultrasonic flaw detection by the ultrasonic flaw detection apparatus and ultrasonic flaw detection method according to the first embodiment of the present invention. In particular, FIG. 10 illustrates legends of the illustrated graphs and FIG. 11 illustrates comparison between conventional art and the present invention.

Each graph illustrated in FIG. 10 and FIG. 11 represents a flaw detection signal along a vertical axis and time over which the flaw detection signal is detected along a horizontal axis. Further, broken lines in the figures represent boundary echo detection thresholds, alternate long and short dashed lines represent boundary echo detection times, and alternate long and two short dashed lines represent start points and end points of flaw detection gates.

The flaw detection signals illustrated in FIG. 10 and FIG. 11 are obtained by transmission type flaw detection configured as illustrated in FIG. 2, and water is used as a contact medium therefor. Further, a frequency of ultrasonic waves used in the flaw detection is 25 MHz, and after received ultrasonic waves are converted into an electric signal, AD conversion is performed thereon with a sampling frequency of 250 MHz.

Furthermore, in the transmission type flaw detection according to this working example, 200 pairs of ultrasonic probes are used for the same test object. FIG. 11 illustrates flaw detection signals for an element pair "A" and an element pair "B" thereof. Moreover, two types of test objects, a test object 1 and a test object 2, were tested in this working example.

As illustrated in FIG. 11, by the ultrasonic flaw detection of the conventional art, for both of a setting 1 and a setting 2, problems occur in setting of flaw echo detection gates, while by the ultrasonic flaw detection according to the embodiment of the present invention, flow echo detection gates are set appropriately. By the setting 1 of the conventional art, a problem does not occur for the test object 1, but a boundary echo is erroneously detected by the element pair B for the test object 2. Further, by the setting 2 of the conventional art, a problem does not occur for the test object 2, but an undetected area is increased by the element pair "A" for the test object 1.

On the contrary, by the ultrasonic flaw detection according to the embodiment of the present invention, since settings according to the test objects are selected, for both of the test object 1 and test object 2, the flaw echo detection gates are set appropriately.

### [Ultrasonic Flaw Detection Apparatus According to Second Embodiment]

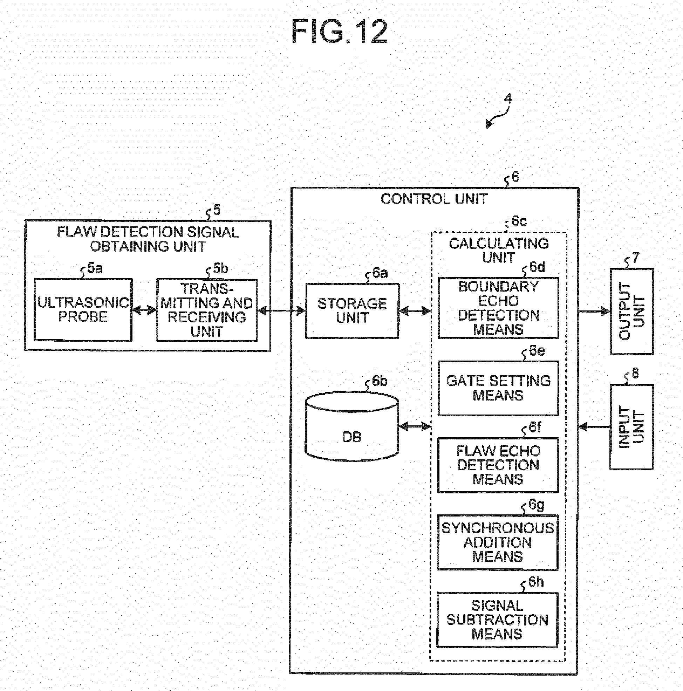

FIG. 12 is a block diagram schematically illustrating a configuration of an ultrasonic flaw detection apparatus according to a second embodiment of the present invention. The ultrasonic flaw detection apparatus according to the second embodiment of the present invention has a function of improving flaw echo detection accuracy, the function being added with the ultrasonic flaw detection apparatus of the first embodiment. Therefore, in the following description, description of any configuration common to the ultrasonic flaw detection apparatus of the first embodiment will be omitted as appropriate by appending the same signs thereto.

As illustrated in FIG. 12, this ultrasonic flaw detection apparatus 4 has: a flaw detection signal obtaining unit 5, which transmits ultrasonic waves for detecting a defect in a test object and receives a flaw detection signal resulting from the transmitted ultrasonic waves; a control unit 6, which controls each unit of the ultrasonic flaw detection apparatus 4; an output unit 7, which outputs a detection result for the test object and the like; and an input unit 8, which inputs various pieces of information. The flaw detection signal obtaining unit 5, the output unit 7, and the input unit 8 are the same elements as those of the first embodiment.

The control unit 6 includes a storage unit 6a, a database (DB) 6b, and a calculating unit 6c, and controls each unit of the ultrasonic flaw detection apparatus 4.
The storage unit 6a is a temporary storage device that stores therein various pieces of information, such as test data of the test object, which have been received from the flaw detection signal obtaining unit 5. In particular, the storage unit 6a according to the second embodiment of the present invention has a storage capacity that enables storage of, not only the latest flaw detection signal received from the flaw detection signal obtaining unit 5, but also flaw detection signals of a plural number of times. The database (DB) 6b is the same element as that of the first embodiment.

The calculating unit 6c analyzes the flaw detection signals stored in the storage unit 6a to detect a flaw echo by referring to the data recorded in the database (DB) 6b. The calculating unit 6c realizes, with hardware or software, a boundary echo detection means 6d, a gate setting means 6e, a flaw echo detection means 6f, a synchronous addition means 6g, a signal subtraction means 6h, and a control means for controlling each of other units of the ultrasonic flaw detection apparatus 4.

The boundary echo detection means 6d detects boundary echo detection times in flaw detection signals of a plural number of times stored in the storage unit 6a by referring to the database (DB) 6b and using a boundary echo detection threshold according to the test object. The synchronous addition means 6g aligns the flaw detection signals of the plural number of times based on the boundary echo detection times detected by the boundary echo detection means 6d and generates a subtraction signal by performing synchronous addition averaging of the flaw detection signals of the plural number of times. The signal subtraction means 6h subtracts the subtraction signal from the latest flaw detection signal of the flaw detection signals of the plural number of times stored in the storage unit 6a. Upon this subtraction also, the flaw detection signals are aligned based on the boundary echo detection times detected by the boundary echo detection means 6d.

The gate setting means 6e sets an end point of a flaw echo detection gate by referring to the database (DB) 6b and subtracting a gate end point relative position according to the test object from the boundary echo detection time detected by the boundary echo detection means 6d. The boundary echo detection time used upon this setting of the end point of the flaw echo detection gate is one that has been detected by using the flaw detection signal before subtracting the subtraction signal therefrom. The flaw echo detection means 6f detects a flaw echo from the flaw detection signal stored in the storage unit 6a within a range of the flaw echo detection gate that has been set as described above.

The output unit 7 and the input unit 8 are the same elements as those of the first embodiment. Further, the ultrasonic flaw detection apparatus 4 according to the second embodiment of the present invention also performs signal processing by performing AD conversion on the flaw detection signal obtained by the flaw detection signal obtaining unit 5, and the sampling frequency for the AD conversion of the flaw detection signal is desirably equal to or greater than five times the frequency of the flaw detection signal, and more desirably equal to or greater than ten times the frequency of the flaw detection signal. Furthermore, the ultrasonic flaw detection apparatus 4 has been described as being configured to have one ultrasonic probe 5a (reflection type flaw detection) or one pair of ultrasonic probes 5a (transmission type flaw detection), but a configuration with more than one ultrasonic probe 5a (reflection type flaw detection) or more than one pair of ultrasonic probes 5a (transmission type flaw detection) may be adopted.

### [Ultrasonic Flaw Detection Method According to Second Embodiment]

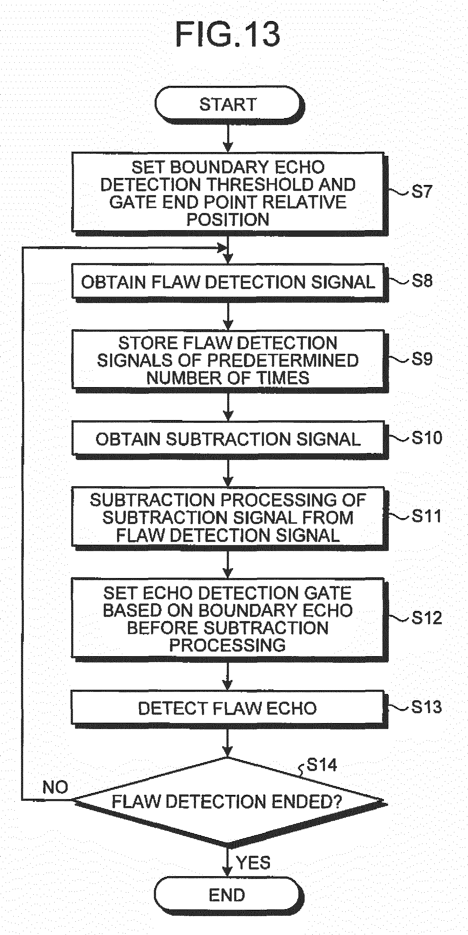

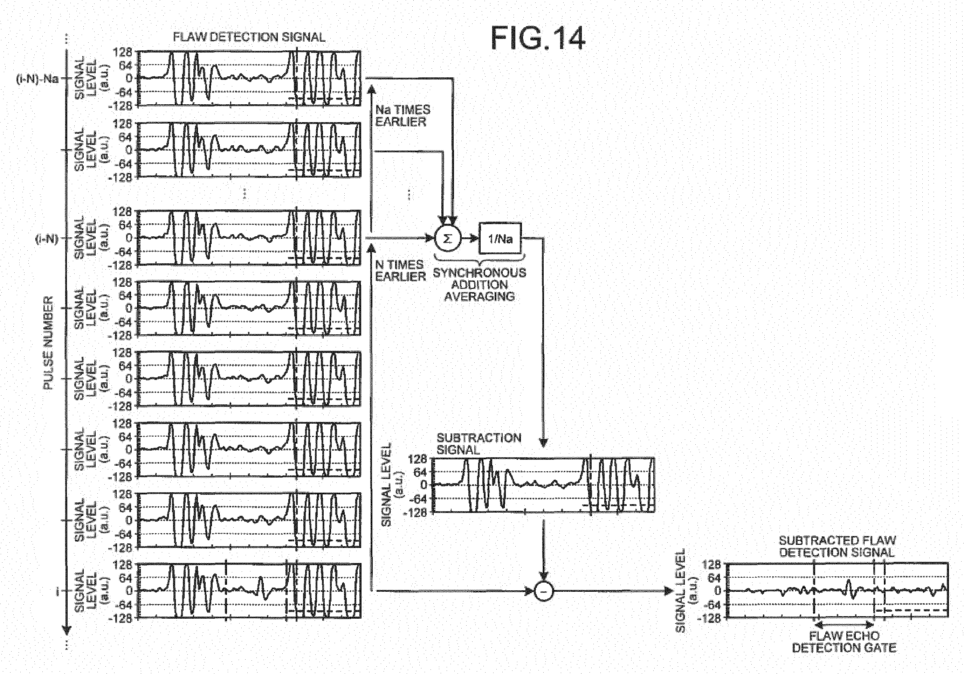

Hereinafter, with reference to FIG. 13 and FIG. 14, an ultrasonic flaw detection method according to the second embodiment of the present invention will be described. In the following description, the ultrasonic flaw detection method according to the second embodiment of the present invention will be described with reference to the drawings of the configuration of the ultrasonic flaw detection apparatus according to the second embodiment of the present invention and the like, but the ultrasonic flaw detection method according to the second embodiment of the present invention is not to be limited by the configuration illustrated in these drawings.

FIG. 13 is a flow chart illustrating a sequence of the ultrasonic flaw detection method according to the second embodiment of the present invention, and FIG. 14 is an explanatory diagram schematically illustrating the ultrasonic flaw detection method according to the second embodiment of the present invention. As illustrated in FIG. 13, in the ultrasonic flaw detection method according to the embodiment of the present invention, first, the calculating unit 6c refers to the database (DB) 6b and performs setting of a boundary echo detection threshold and a gate end point relative position according to a test object (Step S7). The database (DB) 6b records therein, as described already, the data, such as the correspondence between the flaw detection order of test objects, and the boundary echo detection thresholds and gate end point relative positions, and thus the boundary echo detection threshold and the gate end point relative position corresponding to the test object, on which the ultrasonic flaw detection apparatus 4 is currently performing flaw detection, are selected.

Next, the flaw detection signal obtaining unit 5 converts ultrasonic waves received from the test object to an electric signal and obtains a flaw detection signal (Step S8). The storage unit 6a of the control unit 6 then temporarily stores therein flaw detection signals of a predetermined number of times obtained by the flaw detection signal obtaining unit 5 (Step S9). The predetermined number of times of the flaw detection signals temporarily stored in the storage unit 6a is determined by a sum (N+Na) of predetermined constants N and Na. As illustrated in FIG. 14, of the flaw detection signals of (N+Na) times stored in the storage unit 6a of the control unit 6, the flaw detection signals of N times and the flaw detection signals of Na times are treated differently later. Therefore, the constants N and Na are defined as different constants, and these constants are specified beforehand by an operator operating the input unit 8, for example, before processing by the ultrasonic flaw detection method according to the second embodiment of the present invention.

Every time a pulse signal of ultrasonic waves is transmitted from the flaw detection signal obtaining unit 5, the latest flaw detection signal is obtained. Therefore, at Step S9, every time the latest flaw detection signal is transmitted from the flaw detection signal obtaining unit 5, the storage unit 6a deletes the oldest one of the flaw detection signals stored therein and updates the flaw detection signals of (N+Na) times stored therein.

Next, as illustrated in FIG. 14, the synchronous addition means 6g of the calculating unit 6c reads out the flaw detection signals corresponding to Na times, which are from (N+Na) times earlier to N times earlier, stored in the storage unit 6a, and obtains a subtraction signal by performing synchronous addition averaging processing (Step S10). In order to perform synchronous addition of the flaw detection signals, the respective flaw detection signals need to be aligned by defining a reference. Thus, at Step S10, a boundary echo detection time detected by the boundary echo detection means 6d is used as the reference of the synchronous addition.

That is, the boundary echo detection means 6d detects a boundary echo of each of the flaw detection signals corresponding to Na times, which are from (N+Na) times earlier to N times earlier, by using the boundary echo detection threshold set in Step S7. In other words, the boundary echo detection means 6d performs detection of a boundary echo by referring to the database (DB) 6b and using the boundary echo detection threshold according to the test object. If a value of the boundary echo detection threshold is positive and the flaw detection signal exceeds the boundary echo detection threshold within a boundary echo detection gate, or if a value of the boundary echo detection threshold is negative and the flaw detection signal becomes less than the boundary echo detection threshold within a boundary echo detection gate, the boundary echo detection means 6d determines that a boundary echo has been detected and regards a time at which this boundary echo is detected as a boundary echo detection time.

The synchronous addition means 6g performs synchronous addition of the flaw detection signals with reference to the boundary echo detection time of each flaw detection signal detected as described above, and thereafter, by performing division by Na, which is the number of flaw detection signals for which synchronous addition has been performed, performs synchronous addition averaging of the flaw detection signals. As described above, the signal obtained by the synchronous addition averaging processing by the synchronous addition means 6g is the subtraction signal.

Next, as illustrated in FIG. 14, the signal subtraction means 6h of the calculating unit 6c subtracts the subtraction signal from the latest flaw detection signal of the flaw detection signals of the plural number of times stored in the storage unit 6a (Step S11). Upon this subtraction also, the flaw detection signals are aligned based on the boundary echo detection times detected by the boundary echo detection means 6d.

Next, the gate setting means 6e sets an end point of a flaw echo detection gate by referring to the database (DB) 6b, and subtracting the gate end point relative position according to the test object from the boundary echo detection time detected by the boundary echo detection means 6d (Step S12). The boundary echo detection time used upon the setting of the end point of the flaw echo detection gate is one that has been detected by using the flaw detection signal before the subtraction of the subtraction signal therefrom.

The flaw echo detection means 6f of the calculating unit 6c detects a flaw echo from the flaw detection signal stored in the storage unit 6a within a range of the flaw echo detection gate set in Step S12 (Step S13).

Lastly, the control unit 6 determines whether or not the ultrasonic flaw detection apparatus 4 has ended flaw detection of a predetermined range or a predetermined number of times (Step S14). If flaw detection of the predetermined range has not been ended (Step S14: No), return to Step S8 is performed, and the flaw detection signal obtaining unit 5 obtains the next flaw detection signal. On the contrary, if flaw detection of the predetermined range has been ended (Step S14: Yes), the ultrasonic flaw detection method according to the second embodiment of the present invention is ended.

As can be seen from the flaw detection signal after the subtraction processing in FIG. 14, by the ultrasonic flaw detection method according to the second embodiment of the present invention, since detection of a flaw echo is performed within a range of a flaw echo detection gate in a state where a boundary echo has been reduced, even if the boundary echo has changed and has interfered with the range of the echo detection gate, possibility of erroneous detection being caused is largely reduced.

As described above, the ultrasonic flaw detection methods and the ultrasonic flaw detection apparatuses according to the embodiments of the present invention achieve the effect of, while minimizing an undetected area, not causing erroneous detection, even if forms of boundary echoes change from test object to test object. The ultrasonic flaw detection methods and ultrasonic flaw detection apparatuses according to the embodiments of the present invention are applicable to any of the reflection type flaw detection and the transmission type flaw detection, but are more preferably applied to the transmission type flaw detection. This is because, as illustrated in FIG. 2, for the transmission type flaw detection, if the flaw 3 is present near the front surface 2a, just the separation between the flaw echo F₂ and the reflection echo T₂ needs to be enabled, and if the flaw 3 is present near the back surface 2b, just the separation between the flaw echo F₁ and the reflection echo T₂ needs to be enabled. That is, in the transmission type flaw detection, the ultrasonic flaw detection methods and ultrasonic flaw detection apparatuses according to the embodiments of the present invention enable appropriate detection of a flaw echo even if the flaw 3 is present near the front surface 2a or even if the flaw 3 is present near the back surface 2b.

### Industrial Applicability

According to the present invention, an ultrasonic flaw detection method and an ultrasonic flaw detection apparatus are able to be provided, which cause no erroneous detection while minimizing an undetected area, even if forms of boundary echoes change from test object to test object.

### Reference Signs List

- 1: TRANSMITTING AND RECEIVING PROBE

- 1a: TRANSMITTING PROBE
- 1b: RECEIVING PROBE
- 2: TEST OBJECT
- 3: FLAW
- 4: ULTRASONIC FLAW DETECTION APPARATUS
- 5: FLAW DETECTION SIGNAL OBTAINING UNIT
- 5a: ULTRASONIC PROBE
- 5b: TRANSMITTING AND RECEIVING UNIT
- 6: CONTROL UNIT
- 6a: STORAGE UNIT
- 6b: DATABASE (DB)
- 6c: CALCULATING UNIT
- 6d: BOUNDARY ECHO DETECTION MEANS
- 6e: GATE SETTING MEANS
- 6f: FLAW ECHO DETECTION MEANS
- 6g: SYNCHRONOUS ADDITION MEANS
- 6h: SIGNAL SUBTRACTION MEANS
- 7: OUTPUT UNIT
- 8: INPUT UNIT

## Claims

1. An ultrasonic flaw detection method, comprising:
a condition setting step of setting, according to a type of a test object, a boundary echo detection threshold and a gate end point relative position;
a flaw detection signal obtaining step of obtaining a flaw detection signal, by converting ultrasonic waves received from the test object into an electric signal;
a boundary echo detection step of detecting a boundary echo detection time of the flaw detection signal, by using the boundary echo detection threshold;
a flaw echo detection gate setting step of setting an end point of a flaw echo detection gate, by subtracting the gate end point relative position from a base time determined based on the boundary echo detection time; and
a flaw echo detection step of detecting a flaw echo, by using the flaw detection signal within the flaw echo detection gate.

2. The ultrasonic flaw detection method according to claim 1, wherein in the boundary echo detection step, when a value of the boundary echo detection threshold is positive and the flaw detection signal within a predetermined boundary echo detection gate exceeds the boundary echo detection threshold, or when the value of the boundary echo detection threshold is negative and the flaw detection signal within a predetermined boundary echo detection gate becomes less than the boundary echo detection threshold, determination that a boundary echo has been detected is performed and a time at which the boundary echo is detected is regarded as the boundary echo detection time.

3. The ultrasonic flaw detection method according to claim 1 or 2, wherein in the flaw echo detection gate setting step, the base time is set such that a change in the base time per measurement is within a predetermined range.

4. The ultrasonic flaw detection method according to any one of claims 1 to 3, wherein
in the flaw detection signal obtaining step, ultrasonic waves received from the test object are converted to electric signals to obtain flaw detection signals, and the obtained flaw detection signals of a predetermined number of times are temporarily stored,
in the boundary echo detection step, by using the boundary echo detection threshold for each of the flaw detection signals of the predetermined number of times, the boundary echo detection time of the flaw detection signal is detected, and
in the flaw echo detection step, a flaw echo is detected by using a flaw detection signal obtained as a result of subtracting a synchronous addition average of the flaw detection signals with reference to the boundary echo detection time of the flaw detection signal, from the latest flaw detection signal of the flaw detection signals of the predetermined number of times.

5. An ultrasonic flaw detection apparatus, comprising:
a flaw detection signal obtaining unit that obtains a flaw detection signal by converting ultrasonic waves received from a test object into an electric signal;
a database that records therein a boundary echo detection threshold and a gate end point relative position, according to a type of the test object;
a boundary echo detection means that detects a boundary echo detection time of the flaw detection signal by using the boundary echo detection threshold recorded in the database;
a gate setting means that sets an end point of a flaw echo detection gate by subtracting the gate end point relative position recorded in the database from a base time determined based on the boundary echo detection time; and
a flaw echo detection means that detects a flaw echo by using the flaw detection signal within the flaw echo detection gate.

6. The ultrasonic flaw detection apparatus according to claim 5, wherein when a value of the boundary echo detection threshold is positive and the flaw detection signal within a predetermined boundary echo detection gate exceeds the boundary echo detection threshold, or when the value of the boundary echo detection threshold is negative and the flaw detection signal within a predetermined boundary echo detection gate becomes less than the boundary echo detection threshold, the boundary echo detection means determines that a boundary echo has been detected, and regards a time at which the boundary echo is detected as the boundary echo detection time.

7. The ultrasonic flaw detection apparatus according to claim 5 or 6, wherein the gate setting means sets the base time such that a change in the base time per measurement is within a predetermined range.

8. The ultrasonic flaw detection apparatus according to any one of claims 5 to 7, further comprising:
a storage unit that temporarily stores therein flaw detection signals of a plural number of times obtained by the flaw detection signal obtaining unit;
a synchronous addition means that generates a subtraction signal by aligning the flaw detection signals based on the boundary echo detection times detected by the boundary echo detection means and performing synchronous addition averaging of the flaw detection signals; and
a signal subtraction means that generates a subtracted flaw detection signal by subtracting the subtraction signal from the latest flaw detection signal of the flaw detection signals stored in the storage unit,
wherein the flaw echo detection means detects a flaw echo by using the subtracted flaw detection signal.

## Patentansprüche

1. Ultraschall-Fehlererfassungsverfahren, umfassend:
einen Bedingungseinstellschritt des Einstellens einer Grenzecho-Erfassungsschwelle und einer Gate-Endpunkt-Relativposition gemäß einem Typ eines Testobjekts;
einen Fehlererfassungssignal-Bezugsschritt des Beziehens eines Fehlererfassungssignals durch Umwandeln von Ultraschallwellen, die von dem Testobjekt empfangen werden, in ein elektrisches Signal;
einen Grenzecho-Erfassungsschritt des Erfassens einer Grenzecho-Erfassungszeit des Fehlererfassungssignals unter Verwendung der Grenzecho-Erfassungsschwelle;
einen Fehlerecho-Erfassungs-Gate-Einstellschritt des Einstellens eines Endpunktes eines Fehlerecho-Erfassungs-Gates durch Subtrahieren der Gate-Endpunkt-Relativposition von einer Basiszeit, die auf der Grundlage der Grenzecho-Erfassungszeit bestimmt wird; und
einen Fehlerecho-Erfassungsschritt des Erfassens eines Fehlerechos unter Verwendung des Fehlererfassungssignals innerhalb des Fehlerecho-Erfassungs-Gates.

2. Ultraschall-Fehlererfassungsverfahren nach Anspruch 1, bei dem bei dem Grenzecho-Erfassungsschritt, wenn ein Wert der Grenzecho-Erfassungsschwelle positiv ist und das Fehlererfassungssignal innerhalb eines vorgegebenen Grenzecho-Erfassungs-Gates die Grenzecho-Erfassungsschwelle überschreitet, oder wenn der Wert der Grenzecho-Erfassungsschwelle negativ ist und das Fehlererfassungssignal innerhalb eines vorbestimmten Grenzecho-Erfassungs-Gates kleiner wird als die Grenzecho-Erfassungsschwelle, bestimmt wird, dass ein Grenzecho erfasst worden ist, und eine Zeit, zu der das Grenzecho erfasst wird, als Grenzecho-Erfassungszeit betrachtet wird.

3. Ultraschall-Fehlererfassungsverfahren nach Anspruch 1 oder 2, bei dem bei dem Fehlerecho-Erfassungs-Gate-Einstellschritt die Basiszeit so eingestellt wird, dass eine Änderung der Basiszeit pro Messung innerhalb eines vorgegebenen Bereichs liegt.

4. Ultraschall-Fehlererfassungsverfahren nach einem der Ansprüche 1 bis 3, bei dem
bei dem Fehlererfassungssignal-Bezugsschritt von dem Testobjekt empfangene Ultraschallwellen in elektrische Signale umgewandelt werden, um Fehlererfassungssignale zu beziehen, und die bezogenen Fehlererfassungssignale einer vorbestimmten Häufigkeit vorübergehend gespeichert werden,
bei dem Grenzecho-Erfassungsschritt unter Verwendung der Grenzecho-Erfassungsschwelle für jedes der Fehlererfassungssignale der vorbestimmten Häufigkeit die Grenzecho-Erfassungszeit des Fehlererfassungssignals erfasst wird und
bei dem Fehlerecho-Erfassungsschritt ein Fehlerecho unter Verwendung eines Fehlererfassungssignals erfasst wird, das man als Ergebnis des Subtrahierens eines synchronen Additionsdurchschnittes der Fehlererfassungssignale unter Bezugnahme auf die Grenzecho-Erfassungszeit des Fehlererfassungssignals von dem letzten Fehlererfassungssignal der Fehlererfassungssignale der vorbestimmten Häufigkeit erhält.

5. Ultraschall-Fehlererfassungsvorrichtung, umfassend:
eine Fehlererfassungssignal-Bezugseinheit, die ein Fehlererfassungssignal durch Umwandeln von von einem Testobjekt empfangenen Ultraschallwellen in ein elektrisches Signal bezieht;
eine Datenbank, die darin eine Grenzecho-Erfassungsschwelle und eine Gate-Endpunkt-Relativposition gemäß einem Typ des Testobjekts aufzeichnet;
eine Grenzecho-Erfassungseinrichtung, die eine Grenzecho-Erfassungszeit des Fehlererfassungssignals unter Verwendung der in der Datenbank aufgezeichneten Grenzecho-Erfassungsschwelle erfasst;
eine Gate-Einstelleinrichtung, die einen Endpunkt eines Fehlerecho-Erfassungs-Gates durch Subtrahieren der in der Datenbank aufgezeichneten Gate-Endpunkt-Relativposition von einer Basiszeit festlegt, die auf der Grundlage der Grenzecho-Erfassungszeit bestimmt wird; und
eine Fehlerecho-Erfassungseinrichtung, die ein Fehlerecho unter Verwendung des Fehler-Erfassungssignals innerhalb des Fehlerecho-Erfassungs-Gatters erfasst.

6. Ultraschall-Fehlererfassungsvorrichtung nach Anspruch 5, bei der, wenn ein Wert der Grenzecho-Erfassungsschwelle positiv ist und das Fehlererfassungssignal innerhalb eines vorbestimmten Grenzecho-Erfassungs-Gates die Grenzecho-Erfassungsschwelle überschreitet, oder wenn der Wert der Grenzecho-Erfassungsschwelle negativ ist und das Fehlererfassungssignal innerhalb eines vorbestimmten Grenzecho-Erfassungs-Gates kleiner wird als die Grenzecho-Erfassungsschwelle, die Grenzecho-Erfassungseinrichtung bestimmt, dass ein Grenzecho erfasst worden ist, und eine Zeit, zu der das Grenzecho erfasst wird, als die Grenzecho-Erfassungszeit betrachtet.

7. Ultraschall-Fehlererfassungsvorrichtung nach Anspruch 5 oder 6, bei der die Gate-Einstelleinrichtung die Basiszeit so einstellt, dass eine Änderung der Basiszeit pro Messung innerhalb eines vorbestimmten Bereichs liegt.

8. Ultraschall-Fehlererfassungsvorrichtung nach einem der Ansprüche 5 bis 7, weiterhin umfassend:
eine Speichereinheit, die vorübergehend darin Fehlererfassungssignale einer Häufigkeit speichert, die durch die Fehlererfassungssignal-Bezugseinheit bezogen werden;
eine synchrone Additionseinrichtung, die ein Subtraktionssignal erzeugt, indem sie die Fehlererfassungssignale auf der Grundlage der von der Grenzecho-Erfassungseinrichtung erfassten Grenzecho-Erfassungszeiten ausrichtet und eine synchrone Additionsmittelwertbildung der Fehlererfassungssignale ausführt; und
eine Signalsubtraktionseinrichtung, die ein subtrahiertes Fehlererfassungssignal durch Subtrahieren des Subtraktionssignals von dem letzten Fehlererfassungssignal der in der Speichereinheit gespeicherten Fehlererfassungssignale erzeugt,
wobei die Fehlerecho-Erfassungseinrichtung ein Fehlerecho unter Verwendung des subtrahierten Fehlererfassungssignals erfasst.

## Revendications

1. Procédé de détection de défaut par ultrasons, comprenant :
une étape de fixation de conditions consistant à fixer, en fonction d'un type d'objet soumis à essai, un seuil de détection d'écho de surface limite et une position relative de point d'extrémité de porte ;
une étape d'obtention de signal de détection de défaut consistant à obtenir un signal de détection de défaut en convertissant des ondes ultrasonores reçues de l'objet soumis à essai en un signal électrique ;
une étape de détection d'écho de surface limite consistant à détecter un instant de détection d'écho de surface limite du signal de détection de défaut en utilisant le seuil de détection d'écho de surface limite ;
une étape de fixation de porte de détection d'écho de défaut consistant à fixer un point d'extrémité d'une porte de détection d'écho de défaut en soustrayant la position relative de point d'extrémité de porte d'un temps de base déterminé sur la base de l'instant de détection d'écho de surface limite ; et
une étape de détection d'écho de défaut consistant à détecter un écho de défaut en utilisant le signal de détection de défaut à l'intérieur de la porte de détection d'écho de défaut.

2. Procédé de détection de défaut par ultrasons selon la revendication 1, dans lequel, dans l'étape de détection d'écho de surface limite, lorsqu'une valeur du seuil de détection d'écho de surface limite est positive et que le signal de détection de défaut à l'intérieur d'une porte de détection d'écho de surface limite prédéterminée dépasse le seuil de détection d'écho de surface limite, ou lorsque la valeur du seuil de détection d'écho de surface limite est négative et que le signal de détection de défaut à l'intérieur d'une porte de détection d'écho de surface limite prédéterminée passe sous le seuil de détection d'écho de surface limite, une détermination du fait qu'un écho de surface limite a été détecté est réalisée et un instant auquel l'écho de surface limite est détecté est considéré comme l'instant de détection d'écho de surface limite.

3. Procédé de détection de défaut par ultrasons selon la revendication 1 ou 2, dans lequel, dans l'étape de fixation de porte de détection d'écho de défaut, le temps de base est fixé de manière à ce qu'un changement du temps de base par mesure reste dans les limites d'une plage prédéterminée.

4. Procédé de détection de défaut par ultrasons selon l'une quelconque des revendications 1 à 3, dans lequel,
dans l'étape d'obtention de signal de détection de défaut, des ondes ultrasonores reçues de l'objet soumis à essai sont converties en signaux électriques pour obtenir des signaux de détection de défaut et les signaux de détection de défaut obtenus d'un nombre d'instants prédéterminé sont temporairement enregistrés,
dans l'étape de détection d'écho de surface limite, en utilisant le seuil de détection d'écho de surface limite pour chacun des signaux de détection de défaut du nombre d'instants prédéterminé, l'instant de détection d'écho de surface limite du signal de détection de défaut est détecté, et
dans l'étape de détection d'écho de défaut, un écho de défaut est détecté en utilisant un signal de détection de défaut qui est un résultat obtenu en soustrayant une moyenne d'addition synchrone des signaux de détection de défaut, avec référence à l'instant de détection d'écho de surface limite, du signal de détection de défaut le plus récent des signaux de détection de défaut du nombre d'instants prédéterminé.

5. Appareil de détection de défaut par ultrasons, comprenant :
une unité d'obtention de signal de détection de défaut qui obtient un signal de détection de défaut en convertissant des ondes ultrasonores reçues d'un objet soumis à essai en un signal électrique ;
une base de données dans laquelle sont enregistrés un seuil de détection d'écho de surface limite et une position relative de point d'extrémité de porte, en fonction d'un type d'objet soumis à essai ;
un moyen de détection d'écho de surface limite qui détecte un instant de détection d'écho de surface limite du signal de détection de défaut en utilisant le seuil de détection d'écho de surface limite enregistré dans la base de données ;
un moyen de fixation de porte qui fixe un point d'extrémité d'une porte de détection d'écho de défaut en soustrayant la position relative de point d'extrémité de porte enregistrée dans la base de données d'un temps de base déterminé sur la base de l'instant de détection d'écho de surface limite ; et
un moyen de détection d'écho de défaut qui détecte un écho de défaut en utilisant le signal de détection de défaut à l'intérieur de la porte de détection d'écho de défaut.

6. Appareil de détection de défaut par ultrasons selon la revendication 5, dans lequel, lorsqu'une valeur du seuil de détection d'écho de surface limite est positive et que le signal de détection de défaut à l'intérieur d'une porte de détection d'écho de surface limite prédéterminée dépasse le seuil de détection d'écho de surface limite, ou lorsque la valeur du seuil de détection d'écho de surface limite est négative et que le signal de détection de défaut à l'intérieur d'une porte de détection d'écho de surface limite prédéterminée passe sous le seuil de détection d'écho de surface limite, le moyen de détection d'écho de surface limite détermine qu'un écho de surface limite a été détecté et considère un instant auquel l'écho de surface limite est détecté comme l'instant de détection d'écho de surface limite.

7. Appareil de détection de défaut par ultrasons selon la revendication 5 ou 6, dans lequel le moyen de fixation de porte fixe l'instant de base de manière à ce qu'un changement de l'instant de base par mesure reste dans les limites d'une plage prédéterminée.

8. Appareil de détection de défaut par ultrasons selon l'une quelconque des revendications 5 à 7, comprenant, en outre :
une unité d'enregistrement qui enregistre temporairement des signaux de détection de défaut d'un nombre multiple d'instants obtenus par l'unité d'obtention de signal de détection de défaut ;
un moyen d'addition synchrone qui génère un signal de soustraction en alignant les signaux de détection de défaut sur la base des instants de détection d'écho de surface limite détectés par le moyen de détection d'écho de surface limite et réalise une moyenne d'addition synchrone des signaux de détection de défaut ; et
un moyen de soustraction de signal qui génère un signal de détection de défaut soustrait en soustrayant le signal de soustraction du signal de détection de défaut le plus récent des signaux de détection de défaut enregistrés dans l'unité d'enregistrement,
dans lequel le moyen de détection d'écho de défaut détecte un écho de défaut en utilisant le signal de détection de défaut soustrait.
